# FASCICULE DE BREVET EUROPEEN

(11) **EP 1 298 788 B1**
(45) Date de publication et mention de la délivrance du brevet: **19.10.2016**
(21) Numéro de dépôt: 02292391.6
(22) Date de dépôt: 27.09.2002
(51) Int. Cl.: H02P 9/10, H02P 25/024

(54) **Procédé pour commuter une machine électrique tournante à deux sources d'alimentation**
Verfahren zur Kommutation einer rotierenden elektrischen Maschine mit zwei Energiequellen
Commutation process for a rotating electrical machine with two power sources

(30) Priorité: 28.09.2001 FR 0112555
(43) Date de publication de la demande: 02.04.2003
(73) Titulaire: VALEO EQUIPEMENTS ELECTRIQUES MOTEUR, 94017 Créteil Cedex (FR)
(72) Inventeur: Bazet, Jean-Michel, 64110 Gelos (FR); Taspinar, Ertugrul, 01400 Chatillon-sur-Chalaronne (FR)
(74) Mandataire: Gamonal, Didier

(56) Documents cités:
- EP-A- 0 884 820
- EP-A1- 0 446 184
- WO-A-01/69762
- DE-C1- 19 733 208
- FR-A- 2 790 341
- FR-A- 2 807 232
- US-A- 3 984 750
- US-B1- 6 281 664

## Description

L'invention concerne une machine électrique tournante, telle qu'un alternateur d'alimentation électrique, notamment pour réseau de bord de véhicule automobile, du type comportant un rotor pourvu d'un bobinage d'excitation et au moins deux sources d'alimentation, qui sont toutes deux montées entre la masse et une ligne d'alimentation et qui comprennent chacune au moins un bobinage d'induit, un pont d'éléments redresseurs et un pont auxiliaire d'éléments redresseurs, et des moyens interrupteurs interposés entre les deux ponts auxiliaires et susceptibles d'être commandés entre une position de fermeture dans laquelle les deux sources sont montées en série de façon que la tension redressée fournie à la ligne d'alimentation soit la somme des tensions fournies par les deux sources, et une position d'ouverture dans laquelle les deux sources alimentent en parallèle la ligne d'alimentation. L'invention propose également un procédé de commutation d'une telle machine. Une telle machine est décrite dans la demande EP1186092 non publiée à la date de la présente demande. Dans la demande DE 197 33 208 il est décrit une machine électrique tournante comportant également deux sources d'alimentation. Des éléments commutables, tels que des thyristors, sont interposés entre les deux sources.

Il s'est avéré que la commutation des moyens interrupteurs entre les deux positions constitue un passage brusque d'une configuration en parallèle à une configuration en série ou inversement, qui provoque des surtensions ou des sous-tensions sur le réseau de bord. Les perturbations ainsi occasionnées sur la tension de batterie ont pour inconvénient majeur de perturber les éclairages et certains équipements sensibles à ce phénomène et, de plus, produit des à-coups néfastes aux enroulements et à la courroie d'entraînement de la machine.

La présente invention a pour but de limiter les perturbations de tension du réseau de bord et de la batterie, qui viennent d' être énoncées.

Pour atteindre ce but, la machine électrique tournante selon l'invention comporte un régulateur de tension, d'une part, susceptible de commander la commutation des moyens interrupteurs entre les positions d'ouverture et de fermeture et d'autre part, doté de moyens permettant une magnétisation ou une démagnétisation rapide du rotor lors de la commutation de la configuration en parallèle des deux bobinages d'induit à la configuration en série des deux bobinages ou inversement.

Le procédé selon l'invention, pour commuter la machine électrique tournante d'une configuration à l'autre est réalisé à l'aide d'un dispositif de démagnétisation ou de magnétisation, que comporte la machine électrique tournante, l'on démagnétise ou magnétise le rotor de cette machine avant une commutation de la configuration en parallèle des deux bobinages d'induit à la configuration en série des deux bobinages ou inversement de façon à limiter les perturbation sur la tension de la batterie.

Selon l'invention, on fait varier la durée de la démagnétisation ou magnétisation.

Selon l'invention, on démagnétise ou magnétise jusqu'à produire une chute de tension voulue et commute ensuite, la tension de batterie chutant plus ou moins vite en fonction de la charge.

Selon encore une autre caractéristique de l'invention, on démagnétise jusqu'à avoir une chute de tension de batterie voulue et continue à démagnétiser ou magnétiser en cas de surtensions jusqu'à ce que la tension de la batterie rentre dans un intervalle de valeur voulue.

Selon un exemple non compris dans l'invention, on fait varier la durée de la démagnétisation ou magnétisation en fonction de l'état de charge de la machine en diminuant ou augmentant la durée de la démagnétisation ou magnétisation selon que la machine est plus ou moins chargée, la durée de démagnétisation ou magnétisation étant choisie de façon que la tension de la batterie n'ait pas le temps de chuter.

L'invention sera mieux comprise, et d'autres buts, caractéristiques, détails et avantages de celle-ci apparaîtront plus clairement dans la description explicative qui va suivre faite en référence aux figures annexées données uniquement à titre d'exemple.
- La figure 1 montre le schéma d'une machine électrique tournante selon l'invention, et
- La figure 2 illustre le débit électrique de la machine en fonction de la vitesse de rotation de celle-ci lors d'une commutation de sa configuration en série dans sa configuration en parallèle.

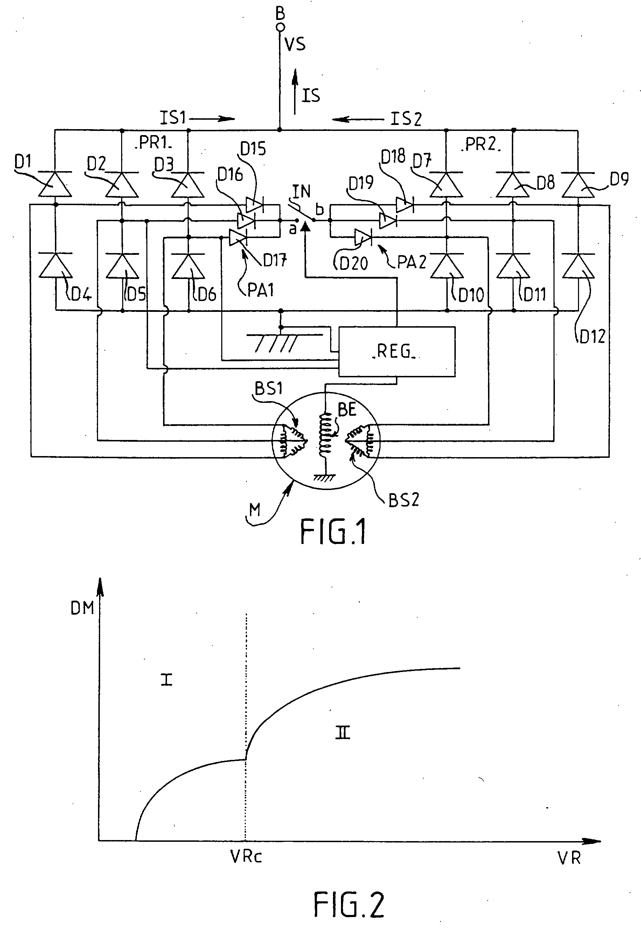

La figure 1 illustre schématiquement la structure d'une machine électrique tournante telle qu'un alternateur notamment pour l'alimentation électrique du réseau de bord d'un véhicule automobile, qui comporte un rotor pourvu d'au moins un bobinage d'excitation BE et deux bobinages d'induit de stator BS1 et BS2 constituant chacun une source d'alimentation en énergie électrique du réseau de bord représenté par la batterie B du véhicule. L'enroulement de rotor et les bobinages de stator sont du type connu en soi.

Pour plus de précisions, on se reportera aux documents WO01/69762, WO02/50976 et WO02/054566.

Le bobinage de stator BS1 est relié, de façon également connue en soi, à un pont PR1 de redressement du courant produit par ce bobinage tandis que l'autre bobinage de stator BS2 est relié à un pont de redressement PR2. Les deux ponts PR1, PR2 comportent chacun, de façon également connue en soi, deux demi-ponts de diode, l'un positif, l'autre négatif. Ainsi le pont PR1 comporte six diodes D1 à D6 et le pont PR2 six diodes D7 à D12.

A chaque pont redresseur PR1 et PR2 est associé un pont redresseur auxiliaire respectivement PA1 et PA2. Le pont auxiliaire PA1 comporte trois diodes D15 à D17. Chaque diode est reliée par son anode au point de la jonction d'une phase de bobinage de stator BS1 au pont redresseur PR1. Les cathodes des trois diodes sont réunies et reliées à une borne a d'un dispositif interrupteur IN.

Le pont redresseur auxiliaire PA2 comporte également trois diodes, à savoir les diodes D18 à D20 dont les anodes sont reliées ensemble et connectées à l'autre borne b de l'interrupteur IN. La cathode de chaque diode D18 et D20 est reliée au point de connexion d'une phase du bobinage de stator B52 au point redresseur PR2.

Le fonctionnement d'un tel système est le suivant.

Lorsque l'interrupteur IN est fermé et interconnecte les bornes a et b, la tension mesurée à la borne a est la tension redressée délivrée par les diodes D15, D16, D17. Les diodes D1 à D3 sont polarisées en inverse et ainsi restent bloquées. La fermeture de l'interrupteur IN provoque en outre le blocage des diodes D10 à D12 du second pont redresseur PR2 qui peuvent être considérées comme étant remplacées par des diodes du pont redresseur auxiliaire D18 à D20. Par conséquent l'interrupteur relie en série les deux sources triphasées. La tension VS est donc la somme des tensions redressées fournies par les deux sources.

Par contre, lorsque l'interrupteur IN occupe sa position d'ouverture, représentée sur la figure 1, la tension VS est égale à la tension délivrée par chaque source, tandis que le courant de sorti est la somme des courants de sortie IS1 et IS2 produits par les deux sources.

La commutation de l'interrupteur IN entre ces positions d'ouverture et de fermeture est commandée par le régulateur REG de la machine M, comme cela est indiqué par une ligne fléchée.

Ce régulateur assure, de façon connue en soi l'excitation du bobinage d'excitation ou inducteur BE du rotor par l'intermédiaire du transistor d'excitation classique en appliquant à la grille de ce transistor un signal de commande d'excitation approprié constitué d'un signal à modulation de largeur d'impulsions dont le rapport cyclique est variable et déterminé par le régulateur. Ce dernier comporte en outre des moyens permettant une démagnétisation ou magnétisation rapide du rotor.

Un régulateur de ce type est décrit dans la demande de brevet français N° 99 02 540 de la demanderesse publiée sous le numéro FR-A-2 790 341. Le dispositif de démagnétisation rapide décrit dans ce document peut donc être utilisé dans le cadre de la présente invention pour éviter les phénomènes de surtension ou de sous-tension apparaissant sur le réseau de bord lors des commutations des deux sources de tension de leur configuration en parallèle dans leur configuration en série et inversement, de plusieurs manières qui seront maintenant décrites ci-après. Bien entendu tout autre dispositif de démagnétisation ou de magnétisation connu pourrait être utilisé.

La figure 2 illustre le problème occasionné par le passage brusque du montage série au montage parallèle et inversement. Cette figure montre le débit DM de la machine en fonction de sa vitesse de rotation VR. La commutation intervient à la vitesse VRc. A gauche de ce point dans la zone I, c'est-à-dire à des vitesses inférieures la machine est en configuration série tandis que, à droite dans la zone II la machine est en configuration parallèle. On constate que le débit alternateur subit un changement brusque lors de la commutation.

L'invention a pour but d'adoucir ce changement pour éviter les surtensions et sous-tensions qui apparaissent normalement, c'est-à-dire à l'absence des mesures d'empêchement de ces phénomènes proposés par l'invention.

L'invention propose un procédé pour limiter les perturbations produites lors de la commutation. Les perturbations les plus sévères sont présentes lors des commutations de la configuration parallèle à la configuration en série par fermeture de l'interrupteur IN. Pour au moins réduire considérablement les perturbations, on procède à la démagnétisation susmentionnée du rotor. Lors d'une commutation de la configuration en série à la configuration en parallèle, on effectue une magnétisation du rotor en utilisant les mêmes stratégies.

Plusieurs modes de réalisation de ce procédé sont proposés.

Une première stratégie non comprise dans l'invention vise à limiter les perturbations sur la tension de la batterie. Cette stratégie consiste à calculer et à appliquer après la commutation une nouvelle valeur de rapport cyclique de commande du transistor d'excitation du régulateur. Cependant la constante de temps rotorique ne permet pas de limiter au maximum la surtension ou la sous-tension selon que l'on démagnétise ou magnétise le rotor.

Les tableaux I et II résument les variations des tensions constatées dans le cadre de l'invention, lors de la commutation respectivement parallèle à série et série à parallèle.

**Tableau I.**

| Courant débité par l'alternateur | Surtension | Sous-tension | Pic de courant | Temps de reprise de la régulation |
|---|---|---|---|---|
| 5 A | 5 V | 1 V | 80 A | 2,5 s |
| 25 A | 4 V | 2 V | 130 A | 0,8 s |
| 60 A | 3 V | 2 V | 150 A | 0,6 s |

**Tableau II**

| Courant débité par l'alternateur | Surtension | Sous-tension | Pic de courant | Temps de reprise de la régulation |
|---|---|---|---|---|
| 5 A | 1 V | 1,5 V | 0 A | 0,7 s |
| 25 A | 2 V | 3 V | 0 A | 0,6 s |
| 60 A | 1 V | 2,5 V | 0 A | 0,6 s |

D'autres stratégies consistent à démagnétiser ou magnétiser plus ou moins suivant les cas pour limiter les à-coups de couple.

Ainsi, une première stratégie selon l'invention consiste à envoyer pendant une période de 200 msec la commande pour démagnétiser ou magnétiser le rotor avant de commuter la machine en série ou parallèle.

Le tableau III résume les variations de tension constatées lors de la commutation parallèle à série dans le cadre de cette stratégie.

**Tableau III.**

| Courant débité par l'alternateur | Surtension | Sous-tension | Pic de courant | Temps de reprise de la régulation |
|---|---|---|---|---|
| 5 A | 2 V | 2 V | 80 A | 1,5 s |
| 25 A | 0 V | 2,5 V | 100 A | 0,7 s |
| 60 A | 0,5 V | 4,5 V | 100 A | 0,7 s |

Les modes de réalisation ou stratégies du procédé selon l'invention, qui vient d'être décrit, sont efficaces à un point de fonctionnement donné. Or il s'avère avantageux d'avoir une durée de démagnétisation ou de magnétisation variable et efficace à tous les points de fonctionnement. L'invention propose des versions de réalisation d'un tel mode de réalisation de l'invention qui sont basées sur une durée de démagnétisation ou de magnétisation variable.

Une première version utilise la tension de la batterie. On démagnétise jusqu'à avoir une chute de tension voulue et on commute ensuite de la configuration en parallèle à la configuration en série. Etant donné que la tension de la batterie chute plus ou moins vite en fonction de la charge de la machine, on obtient une durée variable de la démagnétisation. Cette version du procédé présente l'avantage que l'on diminue les surtensions en générant une chute de tension avant la commutation. Il est à noter que, lors de la commutation de la configuration série à la configuration parallèle, on effectue une magnétisation du rotor selon les mêmes critères.

Le tableau IV résume les variations de tension lors de la commutation parallèle à série constatée dans le cadre de cette version de mise en oeuvre de l'invention.

**Tableau IV.**

| Courant débité par l'alternateur | Surtension | Sous-tension | Pic de courant | Temps de reprise de la régulation |
|---|---|---|---|---|
| 10 A | 0 V | 4 V | 80 A | 0,4 s |
| 25 A | 0 V | 4 V | 80 A | 0,4 s |

Une autre version de mise en oeuvre de l'invention reprend le principe de la version précédente sauf que, dans cette version, on continue à démagnétiser en cas de surtension, jusqu'à ce que la tension de la batterie rentre dans un intervalle voulu. Cette version permet de stabiliser plus rapidement la tension de la batterie et de diminuer les surtensions qui pourraient se manifester.

Le tableau V résume les variations de tension constatées lors de la commutation parallèle à série dans le cadre de cette version mise en oeuvre de l'invention.

**Tableau V.**

| Courant débité par l'alternateur | Surtension | Sous-tension | Pic de courant | Temps de reprise de la régulation |
|---|---|---|---|---|
| A vide | 6 V | 0 v | 80 A | 3 s |
| 10 A | 0 V | 4 V | 80 A | 0,4 s |
| 25 A | 0 V | 4 V | 80 A | 0,4 s |

Une autre version non comprise dans l'invention est basée sur le fait que la durée de la démagnétisation ou de la magnétisation est en fonction de l'état de charge de la machine. Plus la machine est chargée plus on diminue la durée de la démagnétisation ou de la magnétisation, et inversement lorsque la charge est faible. Dans cette version, la durée de démagnétisation ou de magnétisation est telle que la tension de la batterie n'ait pas le temps de chuter. On réduit à la fois les à-coups de couple mais aussi les surtensions. La démagnétisation ou la magnétisation se fait avant la commutation de l'interrupteur IN. Il est à noter que l'état de charge de la machine est connu en fonction du courant d'excitation et de la vitesse du rotor.

Encore une autre version non comprise dans l'invention permet de compléter la version précédente et est applicable si les durées de démagnétisation ou de magnétisation sont choisies en fonction de la charge de la machine, les surtensions et les à-coups de couple devant être quasi inexistants. Mais si cela n'était pas le cas, et une surtension venait à apparaître, on continuerait à démagnétiser jusqu'à entrer dans un intervalle de tension pour que la régulation reprenne normalement. On peut même envisager de ne pas procéder à une excitation calculée en fonction de l'état de la machine pour laisser le régulateur libre de procéder d'une manière plus douce. Celui -ci pourrait alors éviter les à-coups de couple dû à la reprise de la régulation.

Il est encore à noter que, pour diminuer les temps de commutation et accentuer les effets des versions de mise en oeuvre de l'invention, décrites ci-dessus, on peut utiliser une démagnétisation rapide en 42 V ou plus.

Le tableau VI donne les variations de tension constatées lors de la commutation parallèle à série, avec démagnétisation rapide à 42V dans le cadre des dernières versions.

**Tableau VI.**

| Courant débité par l'alternateur | Surtension | Sous-tension | Temps de reprise de la régulation |
|---|---|---|---|
| A vide | 1 V | 0 V | 0,2 s |
| 25 A | 1 V | 0 V | 0,2 s |
| 60 A | 1 V | 0 V | 0,2 s |

Bien évidemment cette invention peut s'appliquer à tous types d'alternateurs, notamment des alternateurs refroidis par eau ou par air. De même, ces alternateurs peuvent être triphasés ou hexaphasés comportant un stator bobiné avec du fil rond ou avec des barres de conducteurs, de préférence de section rectangulaire, en forme d'épingles en forme de U insérés dans les encoches du stator comme décrit par exemple dans le document WO02/50976.

Ces alternateurs comportent un support portant à sa périphérie externe un stator et centralement un rotor. Le stator comporte un corps, classiquement sous la forme d'un paquet de tôles, rainurées pour porter les bobinages d'induit.

Ce stator entoure le rotor, qui dans un mode de réalisation est un rotor à griffes portant le bobinage d'excitation comme décrit par exemple dans les documents WO01/69762 et WO02/50976.

En variante le rotor comporte des pôles saillants comme décrit dans le document WO02/054566.

## Revendications

1. Procédé pour commuter une machine électrique tournante, telle qu'un alternateur d'alimentation électrique, notamment pour réseau de bord d'un véhicule automobile, du type comportant un rotor porteur d'un bobinage d'excitation (BE) et au moins deux sources d'alimentation qui sont toutes deux montées entre la masse et une ligne d'alimentation et qui comprennent chacune au moins un bobinage d'induit, (BS1, BS2), un pont d'éléments redresseurs (PR1, PR2) et un pont auxiliaire d'éléments redresseurs (PA1, PA2), et des moyens interrupteurs (IN) interposés entre les deux ponts auxiliaires et susceptibles d'être commandés entre une position de fermeture dans laquelle les deux sources sont montées en série de façon que la tension redressée fournie à la ligne d'alimentation soit la somme des tensions fournies par les deux sources et une position d'ouverture dans laquelle les deux sources alimentent en parallèle la ligne d'alimentation, la machine électrique tournante comporte un dispositif de démagnétisation ou de magnétisation du rotor, **caractérisé en ce que** l'on démagnétise ou magnétise le rotor de cette machine avant une commutation de la configuration en parallèle des deux bobinages d'induit (BS1, BS2) à la configuration en série des deux bobinages ou inversement de façon à limiter les perturbations sur la tension de la batterie, **en ce que** l'on fait varier la durée de la démagnétisation ou de la magnétisation, et **en ce que** l'on démagnétise ou magnétise le rotor jusqu'à produire une chute de tension voulue de la batterie et que l'on effectue ensuite la commutation.

2. Procédé selon la revendication 1 **caractérisé en ce que** l'on magnétise ou démagnétise le rotor pendant une période de 200 msec avant d'effectuer ladite commutation.

3. Procédé selon la revendication 1, **caractérisé en ce que** que l'on continue à démagnétiser ou magnétiser en cas de surtensions ou de sous-tensions jusqu'à ce que la tension de la batterie rentre dans un intervalle de valeurs voulues.

## Patentansprüche

1. Verfahren zum Umschalten einer drehenden elektrischen Maschine, wie einer Lichtmaschine, zur elektrischen Einspeisung insbesondere in ein Bordnetz eines Kraftfahrzeugs des Typs, der einen Rotor, der Träger einer Erregerwicklung (BE) ist, und zumindest zwei Einspeisequellen aufweist, die beide zwischen der Masse und einer Speiseleitung geschaltet werden, und die jeweils zumindest eine Ankerwicklung (BS1, BS2), ein Brückengleichrichterelement (PR1 PR2) und ein Hilfsbrückengleichrichterelement (PA1, PA2) und Schaltermittel (IN) zwischen den zwei Hilfsbrücken aufweisen und geeignet sind, zwischen einer Schließstellung, in der die zwei Quellen in einer Weise in Reihe geschaltet werden, dass die der Speiseleitung bereitgestellte gleichgerichtete Spannung die Summe der durch die zwei Quellen bereitgestellten Spannungen ist, und einer Öffnungsstellung gesteuert zu werden, in der die zwei Quellen die Speiseleitung parallel speisen, die drehende elektrische Maschine weist eine Vorrichtung der Entmagnetisierung oder der Magnetisierung des Rotors auf, **dadurch gekennzeichnet, dass** der Rotor dieser Maschine vor einer Umschaltung der Parallelkonfiguration der zwei Ankerwicklungen (BS1, BS2) in die Reihenkonfiguration der zwei Wicklungen entmagnetisiert oder magnetisiert wird oder umgekehrt, um die Störungen auf die Batteriespannung zu begrenzen,
dass die Dauer der Entmagnetisierung oder der Magnetisierung variiert wird,
und dass der Rotor bis zum Auftreten eines gewollten Spannungsabfalls der Batterie entmagnetisiert oder magnetisiert wird und dass in der Folge die Umschaltung ausgeführt wird.

2. Verfahren nach Anspruch 1, **dadurch gekennzeichnet, dass** der Rotor während eines Zeitraums von 200 msec vor dem Ausführen der Umschaltung magnetisiert oder entmagnetisiert wird.

3. Verfahren nach Anspruch 1, **dadurch gekennzeichnet, dass** im Fall von Überspannungen oder Unterspannungen weiter entmagnetisiert oder magnetisiert wird, bis die Batteriespannung in ein Intervall gewollter Werte zurückkehrt.

## Claims

1. Method for switching a rotating electric machine, such as an electric generator, specifically for a vehicle electrical system, of the type comprising a rotor fitted with an excitation winding (BE) and at least two electric power sources, both of which are arranged between ground and a power supply line, and each of which comprises at least one armature winding (BS1, BS2), a rectifier component bridge (PR1, PR2) and an auxiliary rectifier component bridge (PA1, PA2), and switching means (IN) interposed between the two auxiliary bridges and designed for switching between a closing position, in which the two power sources are arranged in series such that the rectified voltage delivered to the power supply line is the sum of the voltages delivered by the two power sources, and an opening position, in which the two power sources supply the power supply line in parallel, wherein the rotating electric machine comprises a rotor demagnetization or magnetization device, **characterized in that** the rotor of said machine is demagnetized or magnetized prior to the switchover from the parallel configuration of the two armature windings (BS1, BS2) to the series configuration of the two windings, or vice versa, in order to limit disturbances to the battery voltage,
**in that** the duration of demagnetization or magnetization can be varied,
and **in that** the rotor is demagnetized or magnetized until the desired voltage drop on the battery is achieved, whereafter the switchover is executed.

2. Method according to Claim 1, **characterized in that** the rotor is magnetized or demagnetized for a duration of 200 msec before said switchover is executed.

3. Method according to Claim 1, **characterized in that**, in the event of over-voltages or under-voltages, demagnetization or magnetization continues until the battery voltage is restored to the required range of values.
